# EUROPEAN PATENT SPECIFICATION

(11) **EP 2 494 274 B1**
(45) Date of publication and mention of the grant of the patent: **09.07.2014**
(21) Application number: 10778926.5
(22) Date of filing: 29.10.2010
(51) Int. Cl.: F23L 7/00, F23D 1/00, F23M 5/02

(54) **METHOD OF COMBUSTING PARTICULATE SOLID FUEL WITH A BURNER**
VERFAHREN ZUR FESTSTOFFVERBRENNUNG MIT EINEM BRENNER
PROCÉDÉ DE COMBUSTION POUR LES COMBUSTIBLES SOLIDES AVEC UN BRÛLEUR

(30) Priority: 30.10.2009 EP 09174635
(43) Date of publication of application: 05.09.2012
(73) Proprietor: L'Air Liquide Société Anonyme pour l'Etude et l'Exploitation des Procédés Georges Claude, 75007 Paris (FR)
(72) Inventor: BELASSE, Brenice, F-28130 Maintenon (FR); MULON, Jacques, F-91300 Massy (FR); PANIER, Faustine, F-78350 Jouy En Josas (FR); PAUBEL, Xavier, F-92290 Chatenay Malabry (FR); TSIAVA, Rémi, F-91250 Saint Germain Les Corbeil (FR)
(74) Representative: De Vleeschauwer, Natalie Y.L.D.
(86) International application number: PCT/EP2010/066500
(87) International publication number: WO 2011/051464

(56) References cited:
- EP-A2- 0 763 692
- WO-A1-03/098105
- WO-A1-2006/032961
- FR-A1- 2 535 018
- US-A- 4 389 243
- US-A1- 2004 261 671

## Description

The present invention relates to an improved method of combusting particulate solid fuel, such as pulverized coal.

From the applicant's earlier patent application EP-A-0763692, it is known to bum gaseous fuel in an oxy-fuel burner, whereby:
- an outer oxidant flow is conducted through an outer oxidant-conducting passage and discharged through an outer oxidant outlet;
- a gaseous fuel flow is conducted through a fuel-conducting passage and is discharged through a fuel outlet arranged coaxially with respect to the outer oxidant outlet and spaced radially inwardly therefrom; and
- an inner oxidant flow is conducted through an inner oxidant-conducting passage and is discharged through an inner oxidant outlet arranged coaxially with respect to the fuel outlet and spaced radially inwardly therefrom,
whereby each of the outer and inner oxidant flows preferably contains at least 80% oxygen.

This known method as developed by the applicant enables various characteristics of the flame to be effectively controlled by changing the relative flow rates of the gaseous fuel and oxidant flows. For example, by decreasing the inner oxidant flow, the length and luminosity of the flame can be increased, and the flame momentum can be decreased without any mechanical modification of the burner. An important advantage of said method is that it is possible to maintain an optimum flame length when varying the firing rate of the burner. Furthermore, the control of the relative flow rates can be used to change the luminosity of the flame. These properties make this known method for combusting gaseous fuel highly desirable.

However, coal is more abundantly available than gaseous fuel.

It would therefore be desirable to provide a method having advantageous properties similar to those of the known process, but which is applicable to the combustion of a solid fuel such as coal at an industrial level.

It is a goal of the present invention to provide such a method.

It is known in the art to supply coal for combustion to a burner in the form of conveyor-gas propelled pulverized coal. This enables the particulate solid fuel to be supplied to the burner and from the burner to the combustion zone in a manner similar to the supply of gaseous fuel.

Nevertheless, tests conducted by the applicant with different known conveyor-gas propelled particulate solid fuels have shown that the method known from EP-A-0763692 is not as such suitable for the combustion of conveyor-gas propelled particulate solid fuel. It is speculated that this is due to the fundamental differences between the mechanism of combusting gaseous fuels and the multi-step mechanism of combusting solid fuels, which includes, for example, a devolatilisation step. In particular, the phenomena observed by the applicant during these tests were incomplete fuel combustion, flame detachment and flame instability, all of which are highly detrimental to the efficiency of industrial combustion processes. A method of combusting particulate solid fuel is also disclosed by document US20040261671

It is a further goal of the present invention to provide a method for combusting conveyor-gas propelled particulate solid fuel by means of a burner, having similar advantages as those obtained with the method according to EP-A-0763692, and whereby the observed problems of incomplete combustion, flame instability and flame detachment can be overcome.

In accordance with the present method, there is provided a new method of combining oxygen and conveyor-gas propelled particulate solid fuel in a burner to produce a flame. The method comprises the steps of:
- supplying an outer flow of oxygen-containing oxidant to an outer oxidant-conducting passage of the burner, conducting said outer oxidant flow through said outer oxidant-conducting passage and discharging said outer oxidant flow from said outer oxidant-conducting passage through an outer oxidant outlet of the burner,
- supplying a fuel flow to a fuel-conducting passage of the burner, conducting said fuel flow through said fuel-conducting passage and discharging said fuel flow with a fuel discharge velocity from said fuel-conducting passage through a fuel outlet arranged of the burner coaxially with respect to said outer oxidant outlet and spaced radially inwardly therefrom, and
- supplying a first inner flow of oxygen-containing oxidant to an inner oxidant-conducting passage of the burner, conducting said first inner oxidant flow through said inner oxidant-conducting passage and discharging said first inner oxidant flow with an inner oxidant discharge velocity from said inner oxidant-conducting passage through an inner oxidant end outlet of the burner arranged coaxially with respect to said fuel outlet and spaced radially inwardly therefrom,
the fuel flow being a flow of conveyor-gas propelled particulate solid fuel.

It is a specific characteristic of the present invention that a second inner oxidant flow is supplied to the burner. Said second inner oxidant flow, which has a higher oxygen concentration than the conveyor gas, is injected into the fuel-conducting passage and is thus mixed with the fuel flow inside said fuel-conducting passage so as to obtain, upstream of the fuel outlet and upstream of the inner oxidant end outlet, an oxygen-enriched conveyor-gas propelled particulate solid fuel flow having an oxygen content of at least 21 %vol O₂.

It is a further aspect of the invention, that the fuel flow, in the form of the oxygen-enriched conveyor-gas propelled particulate solid fuel flow, is discharged from the fuel-conducting passage with a fuel discharge velocity which differs from the inner oxidant discharge velocity with which the first inner oxidant flow is discharged from the inner oxidant-conducting passage so as to promote mixing between the fuel flow and the first inner oxidant flow downstream of the inner oxidant end outlet.

Preferably, the second inner oxidant flow is injected into the fuel-conducting passage so as to obtain, upstream of the fuel outlet and upstream of the inner oxidant end outlet, an oxygen-enriched conveyor-gas propelled particulate solid fuel flow having an oxygen content of at least 28%vol, and more preferably of at least 32%vol. Thereto, the second inner oxidant flow advantageously has an oxygen content of at least 50%vol O₂, preferably of at least 80 %vol O₂ and more preferably of at least 90%vol O₂. Usefully, both the first and second inner oxidant flows have an oxygen content of at least 50%vol O₂, preferably of at least 80 %vol O₂ and more preferably of at least 90%vol O₂. On a practical level, it is interesting for the first and second inner oxidant flows to have the same oxidant content, in which case they can easily be supplied by a single oxidant source.

The outer oxidant flow may have the same oxidant content as one or both of the first and second inner oxidant flows or may have a different oxidant content. The oxidant content of the outer oxidant flow may be lower than the oxidant content of the first and second inner oxidant flows. The outer oxidant may in particular be air or synthetic air obtained by mixing oxygen with a gas which is generally inert to combustion. Such synthetic air advantageously contains a mixture of oxygen and one or more of combustion gases (i.e. combustion fumes), CO₂ and water vapour and can, for example, have an oxygen content of about 21%vol O₂. When an outer oxidant flow with a lower oxygen content, e.g. an oxygen content of about 21%vol O₂, such as air, is used, a more diffuse flame and larger volume of combustion gases are obtained, as may be advantageous in some industrial combustion processes. When, on the other hand, an outer oxidant flow with a higher oxygen content is used, such as an outer oxidant having an oxygen content of at least 50%vol O₂, of at least 80%vol O₂, or even of at least 90%vol O₂, a more intense flame and smaller volumes of combustion gases are obtained, which may be preferable for other industrial combustion processes. It also enables lower NOx emissions. In particular, the outer, the first inner and the second inner oxidant flows may all have the same oxygen content, in which case they may be supplied by a single oxidant source.

The conveyor gas, which propels the particulate solid fuel to and through the fuel-conducting passage may be air. The conveyor gas may also be or contain combustion gas, CO₂ and/or water vapour. It will be understood that, when the conveyor gas has an oxygen content of 21%vol O₂, the oxygen-enriched conveyor-gas propelled particulate solid fuel flow will have an oxygen content higher than 21%vol O₂, which is generally preferred. High oxygen contents in the conveyor gas upstream of the fuel-conducting passage of the burner are to be avoided, in view of the risks of premature ignition and explosion.

The method of the invention is useful for a wide range of particulate solid fuels, including pulverized coal, pet coke, particulate biomass and mixtures thereof It is particularly useful for the combustion of pulverized coal, including low-grade pulverized coal which has been shown to be difficult to combust efficiently with known particulate fuel burners.

The burner used in the method of the invention advantageously comprises a burner block with a through passage into which the outer oxidant-conducting passage, the fuel-conducting passage and the inner oxidant-conducting passage are mounted. The outlets of the respective gas conducting passages (the inner oxidant-conducting passage, the fuel-conducting passage and the outer oxidant-conducting passage) are then preferably set back from the outlet opening of the through passage in the burner block, which outlet faces the combustion chamber of the furnace.

According to a preferred embodiment of the present invention, the second inner oxidant flow is injected into the fuel-conducting passage at multiple points of injection along the length of the fuel-conducting passage. In this manner, the conveyor-gas propelled particulate solid fuel flow is progressively enriched with oxygen towards the fuel outlet. This embodiment presents a number of advantages such as a lower risk of premature ignition or explosion. Multiple-point injection of the second inner oxidant flow into the fuel-conducting passage also lowers the risk of inhomogeneous distribution of the particulate solid fuel in the conveyor gas, such as particle settling, roping, etc. A particularly suited burner for use in the present invention is described in European patent application 09174622.2 filed on 30 October 2009 and incorporated herein by reference, more specifically the embodiments of said burner with a central oxygen lance. The present invention therefore also relates to the use of such a burner in the present method.

Oxygen enrichments of the conveyor-gas propelled particulate solid fuel flows up to an oxygen content of 35%vol O₂ and of 60%vol O₂ and even more were achieved with the method according to the invention without premature ignition or explosion. In practice, the upper limit for the oxygen enrichment of the conveyor-gas propelled particulate solid fuel flow is determined by the properties, and in particular the flammability, of the particulate solid fuel and, to a lesser extent, by the properties of the conveyor gas. In practice, said oxygen content may for example reach levels of upto 60%vol, preferably upto 80%vol.

The fuel flow, in the form of the oxygen-enriched conveyor-gas propelled particulate solid fuel flow, is preferably mixed with the first inner oxidant flow before being mixed with said outer oxidant flow. This can be achieved by having the inner oxidant end outlet upstream of the fuel outlet. In this manner increased flame stability and attachment is achieved. The combustion is then a staged combustion, with the first inner oxidant flow acting as a primary oxidant flow and the outer oxidant flow acting as a secondary oxidant flow.

The total oxygen supply to the burner typically corresponds to the stoichiometrically required amount of combustion oxygen or a minor excess thereof (for example, a total oxygen supply of upto 115% of the stoichiometrically required amount).

The total oxygen supply to the burner may also be less than the stoichiometrically required amount of combustion oxygen, in particular when the method includes a separate supply of additional oxygen, which is injected separately from the burner.

The total supply of oxygen to the burner is the sum of the oxygen supplied through the outer oxidant flow and through the first and second inner oxidant flows, as well as any oxygen that may be supplied as part of the conveyor gas, for example when the conveyor gas is air. According to a useful embodiment, at least 35% of the total oxygen supply to the burner is supplied through the outer oxidant flow, preferably at least 50% and more preferably at least 60%.

The sum of the oxygen supplied through the first and second inner oxidant flows usefully corresponds to at least 22% of the total oxygen supply to the burner, preferably at least 25%, and not more than 65%, preferably not more than 50%.

Similarly, the sum of the oxygen supplied through the first and second inner oxidant flows is preferably at least 22% and more preferably at least 25% of the stoichiometrically required amount of oxygen, and not more than 65%, preferably not more than 50%.

The first inner oxidant discharge velocity can advantageously be equal to or greater than the outer oxidant discharge velocity, and is preferably in the range of from about 10 to 200 m/s. The fuel discharge velocity can notably be in the range of from 10 to 80 m/s, whereas the outer oxidant discharge velocity is suitably in the range of 10 to 50 m/s. It is, however, a particular advantage of the present invention, that efficient combustion of particulate solid fuel can be achieved at fuel discharge velocities as low as 5 m/s. Consequently, the present invention also includes methods, as described above, for combining oxygen and fuel in a burner to produce a flame, whereby the fuel discharge velocity is within the range of 5 to 80 m/s, preferably between from 5 to 40 m/s and more preferably from 5 to 25 m/s.

According to a preferred embodiment of the present invention, the outer oxidant flow, the fuel flow and the inner oxidant flow are discharged through respectively the outer oxidant outlet, the fuel outlet and the inner oxidant end outlet into a wider precombustion section upstream of the combustion zone of the furnace. This provides for an improved stability and/or attachment of the flame. The wider precombustion section can be integrated in the burner block of the burner. Alternatively, the precombustion section can be integrated in a wall of the combustion chamber of the furnace when the burner is mounted in said wall in a recessed position with respect to said combustion chamber. The length to diameter ratio of said precombustion section is preferably between 0.6 and 1.0, more preferably between 0.7 and 0.9.

The present invention also relates to the use of the method to produce heat in a combustion zone of the furnace, whereby the furnace can in particular be a tunnel kiln or furnace, a passage kiln, a boiler, a rotary kiln or furnace or a tunnel furnace, the particulate solid fuel preferably being preferably pulverized coal.

The method of the invention can in particular be advantageously used in a furnace for the production of hydraulically setting binder, such as cement lime or plaster.

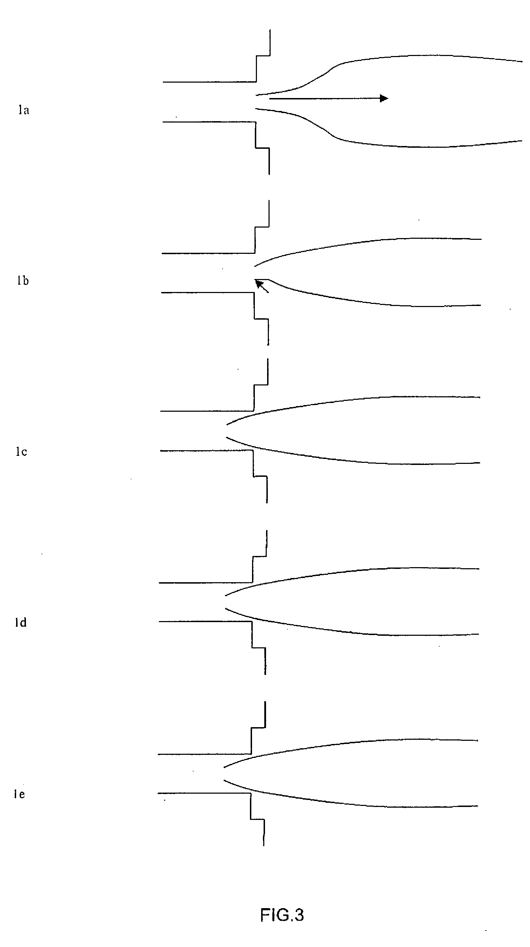

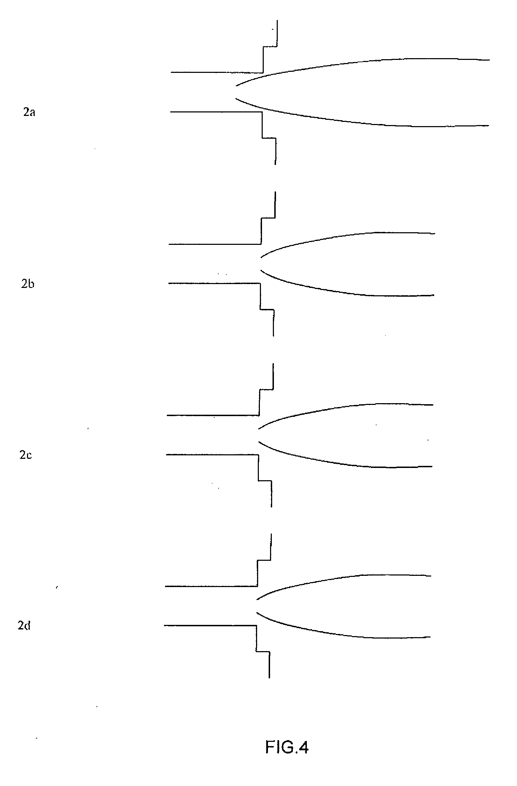

The invention is illustrated in the example hereafter, reference being made to figures 1 to 4, whereby:
- figure 1 is a schematic representation of a cross-section of a burner suitable for use in the invention,
- figure 2 is a schematic representation of a cross section of the injector assembly thereof, and
- figures 3 and 4 are schematic representations in cross section of the type of flame obtained with said burner in accordance with the example.

### Example

Tests were conducted with different ratios of first to second inner oxidant flows.

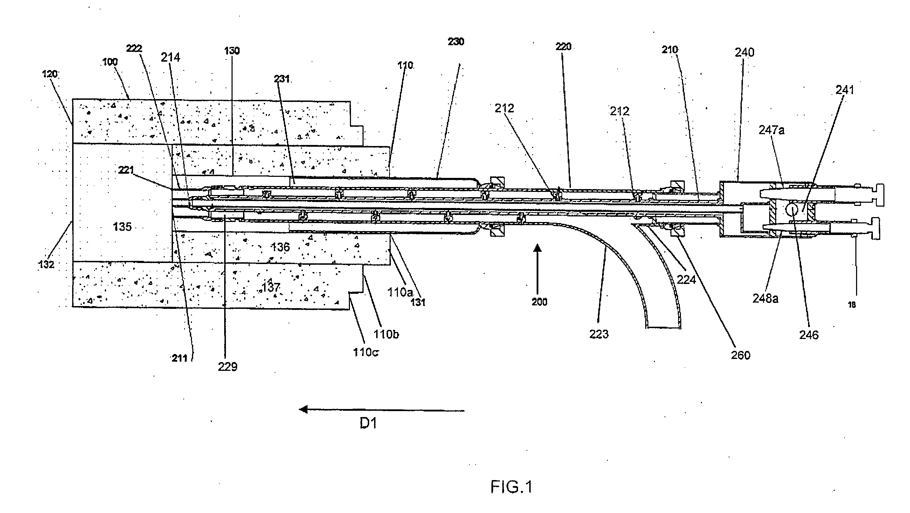

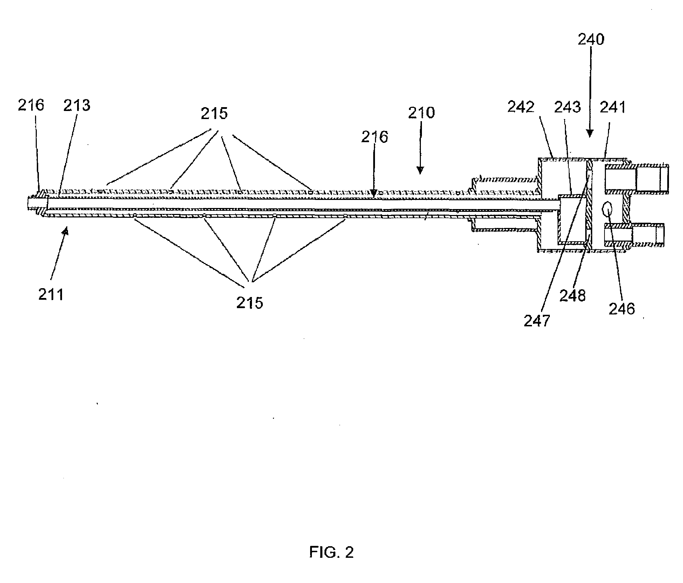

A particulate solid fuel burner with a central oxygen lance as described in European patent application 09174622.2 filed on 30 October 2009was mounted in the side wall of a combustion furnace and illustrated in figures 1 and 2.

The illustrated burner comprises a burner block 100 and an injector assembly 200.

The burner block 100 has an inlet face 110 and an outlet face 120. The block further presents an injector passage 130 extending through the burner block from the inlet face 110 to the outlet face 120.

The injector passage 130 has a passage inlet 131 in the inlet face 110 and a passage outlet 132 in the outlet face 120.

In use, the burner block 100 is mounted or incorporated in the walls of a combustion chamber, so that the outlet face 120 faces the combustion zone inside the combustion chamber whereas the inlet face 110 faces outwards of the furnace and is generally accessible from outside the combustion chamber for burner control, maintenance and repair.

The burner block 100 is made of refractory material.

In the illustrated embodiment, the injector passage 130 comprises a wider precombustion section 135 in the vicinity of the passage outlet 132.

In the illustrated embodiment, the burner block 100 is an assembly of two parts of refractory material 136 and 137. Inlet face 110 comprises several facets 110a, 110b and 110c. The length of the precombustion section (in longitudinal direction D1) is determined by the relative position of the two parts 136, 137 of refractory material.

The injector assembly 200 comprises an inner oxygen supply pipe 210, a fuel injector 220 and an oxygen injector 230.

The downstream ends 211, 221 and 231 of respectively the inner oxidant supply pipe 210, the fuel injector 220 and the oxidant injector 230 are all positioned within the injector passage 130 of the burner block 100. Fuel injector 220 has a fuel injection nozzle 222 at its downstream end 221 and surrounds the inner oxidant supply pipe 210 at least in the vicinity of the downstream end 211 of said inner oxidant supply pipe so as to create a flow of particulate solid fuel propelled by a conveyor gas around the inner oxygen supply pipe 210 and directed towards the passage outlet 132 for injection therefrom into the combustion zone.

In the illustrated embodiment fuel injection nozzle 222 is a separate piece mounted on the downstream end 221 of the fuel injector 220.

A swirler 229 is mounted in fuel injector 220 near its downstream end 221. Said swirler 229 surrounds the inner oxidant supply pipe 210.

Oxidant injector 230 has an outer oxidant nozzle 232 at its downstream end 231 for the injection of the outer oxidant. The oxidant injector 230 surrounds the fuel injector 220, at least in the vicinity of the downstream end 231 of the oxidant injector 230.

In use, the oxidant injector 230 thus provides a flow of outer oxidant around the fuel injector 220 and towards the passage outlet 132 for injection therefrom into the combustion zone.

In the illustrated embodiment, the downstream end 231 of the oxidant injector 230 is positioned further away from the passage outlet 132 than the downstream end 211 and 221 of respectively the inner oxidant supply pipe 210 and the fuel injector 220.

In the vicinity of its downstream end 211, the inner oxidant supply pipe 210 is positioned centrally within fuel injector 220.

A number of lateral inner oxidant nozzles 212 are mounted on the lateral surface of inner oxidant supply pipe 210, by means of perforations 215 in said lateral surface. These lateral inner oxidant nozzles and the corresponding perforations 215 are positioned at different distances from the downstream end 211 of the inner oxidant supply pipe 210.

In use, these lateral second inner oxidant nozzles 212 inject second inner oxidant into the fuel injector body thereby progressively enriching the conveyor gas as it projects the particulate solid fuel towards the fuel injection nozzle 222 and the passage outlet 132.

The lateral inner oxidant nozzles 212 have an injection opening orientated so as to inject second inner oxidant into fuel injector 220 with an injection direction towards the passage outlet 132, substantially tangential to the lateral surface of the oxygen supply pipe and forming an angle α with the longitudinal direction D1 of the injector passage 130.

In the illustrated embodiment, the inner oxidant supply pipe 210 further comprises a central oxidant lance 213 which terminates in a terminal primary oxidant nozzle 216.

The terminal nozzle 216 of the central oxidant lance 213 injects first inner oxidant in the longitudinal direction D1 of the injector passage towards the passage outlet.

An annular passage 214, surrounding the central oxidant lance 213 is formed between the oxidant lance and the lateral surface of the inner oxidant supply pipe 210, the lateral inner oxidant nozzles 212 being in fluid communication with said annular passage 214 via perforations 215.

The fuel injector 220 is in fluid connection with a fuel supply line comprising an elbow 223 upstream of the fuel injector 220. Branch pipe 224 is mounted on the fuel supply line at said elbow 223 and extends in line with the fuel injector 220.

Inner oxidant supply pipe 210 extends from said branch pipe 224 into the fuel injector 220.

Oxidant distributor 240 is positioned at the upstream end of the inner oxidant supply pipe 210. The oxidant distributor 240 comprises an inlet chamber 241 and two outlet chambers 242, 243. In use, the inlet chamber 241 is connected to a source of inner oxidant via inlet opening 246. The first outlet chamber 242 is in fluid connection with the surrounding annular passage 214 of the inner oxidant supply pipe 210. The second outlet chamber 243 is in fluid connection with the central oxidant lance 213. The inlet chamber 241 communicates with the first outlet chamber 242 via first passage 247. The inlet chamber 241 communicates with the second outlet chamber 243 via second passage 248. The oxygen distributor 240 further comprises first and second means 247a and 248a for restricting the flow of inner oxidant through respectively the first and second passage 247 and 248 into respectively the first and second outlet chamber 242 and 243 and consequently for restricting the flow of inner oxidant to respectively the surrounding annular passage 214 and the central oxygen lance 213. Flow restriction can in particular be achieved by manually or automatically restricting the free cross section area of the first, respectively second passage. In the particularly resilient illustrated embodiment first screw 247a and second screw 248a are used as respectively the first and second means for restricting the flow of inner oxidant.

In use, inner oxidant flows from a source of inner oxidant into the inlet chamber 241 of oxidant distributor 240 via inlet opening 246. Said flow of inner oxidant is then divided over the first and second outlet chambers 242 and 243 at a ratio determined by the settings of the first and second means for restricting the flow of inner oxidant. Thereafter, the inner oxidant flows from the first outlet chamber 242 to the central oxygen lance 213, and then to the terminal nozzle 216 and from the second outlet chamber 243 to the surrounding annular passage 214 and then to the lateral inner oxidant nozzles 212.

An auxiliary gaseous fuel burner was used to preheat the furnace to a temperature of 900°C, before starting up above-described the particulate solid fuel burner.

The particulate solid fuel was a standard pulverized coal with a particle size (diameter) in the range of 75 to 120 µm.

The conveyor gas was recycled combustion gas. Analogous results were obtained with air as the conveyor gas.

The conveyor gas was supplied to the burner at a rate of 17,6 Nm3/h. It propelled pulverized coal to the burner at a rate of 30 kg/h.

The outer oxidant was supplied to the burner at a rate of 33 Nm3/h.

The total inner oxidant supply to the burner (first and second inner oxidants) was 13 Nm3/h.

The same oxidant with an oxygen content of 90%vol O₂ was used for the outer, for the first inner and for the second inner oxidant.

The total oxygen supply to the furnace corresponded to 113% of the stoichiometrically required amount of combustion oxygen.

In other words, the outer oxidant supply to the burner corresponded to 71,74% of the total supply to the burner and to 68,07% of the stoichiometrically required amount of oxygen. The total inner oxidant supply to the burner corresponded to 28,26% of the total oxygen supply to the burner and to 31,93% of the stoichiometrically required amount of oxygen.

The inner oxidant discharge velocity was higher than the fuel discharge velocity.

The oxygen-enriched fuel flow mixed with the first inner oxidant flow before mixing with the outer oxidant flow.

The results of said tests are presented in the table below, with reference to the enclosed figures 1 and 2, which are schematic representations in cross section of the type of flame obtained.

| first inner oxidant flow [m3/h ]/ second inner oxygen flow [m3/h ] | observations | Figure |
|---|---|---|
| 1.5 / 11.5 | The flame is unstable and detached from the burner front. | 1a |
| 3.0 / 10.0 | The flame is in part attached to and in part detached from the burner front, with a small improvement in flame stability. | 1b |
| 3.5 / 9.5 | Flame detached from burner front at burner startup, but becomes attached to the burner front shortly thereafter and becomes slightly recessed into the glory hole. | 1c |
| 4.0 / 9.0 | Flame stable and attached to burner, recessed into glory hole. | 1e |
| 5.2 / 7.8 | Flame stable and attached to burner, recessed into glory hole. | 2a |
| 6.5 / 6.5 | Long stable flame stable attached to burner, recessed into glory hole. | 2b |
| 7.5 / 5.5 | Flame no longer recessed in glory hole, getting at times detached from burner. | 2c |
| | Shorter flame. | |
| 9.5 / 3.5 | Flame no longer recessed in glory hole. | 2e |
| | Flame even shorter. | |
| 11.5 / 1.5 | Unstable (pulsating) short flame detached from burner. | 2f |

A more complete combustion of the particulate solid fuel and better flame stability and flame attachment to the burner front were observed using the method according to the present invention than is generally the case with known solid particulate fuel combustion methods when using similar total oxidant and fuel flows.

The bests results were obtained with first to second inner oxidant flow ratios between 4.0/9.0 and 7.5/5.5.

## Claims

1. A method of combining oxygen and fuel in a burner to produce a flame, said method comprising:
- supplying an outer flow of oxygen-containing oxidant to an outer oxidant-conducting passage of the burner, conducting said outer oxidant flow through said outer oxidant-conducting passage and discharging said outer oxidant flow with an outer oxidant discharge velocity from said outer oxidant-conducting passage through an outer oxidant outlet of the burner,
- supplying a fuel flow to a fuel-conducting passage of the burner, conducting said fuel flow through said fuel-conducting passage and discharging said fuel flow with a fuel discharge velocity from said fuel-conducting passage through a fuel outlet of the burner arranged coaxially with respect to the outer oxidant outlet and spaced radially inwardly therefrom,
- supplying a first inner flow of oxygen-containing oxidant to an inner oxidant-conducting passage of the burner, conducting said first inner oxidant flow through said inner oxidant-conducting passage and discharging said first inner oxidant flow with an inner oxidant discharge velocity from said inner oxidant-conducting passage through an inner oxidant end outlet of the burner arranged coaxially with respect to said fuel
outlet and spaced radially inwardly therefrom,
**characterized in that**:
- the fuel flow is a flow of conveyor-gas propelled particulate solid fuel,
- a second inner oxidant flow, having a higher oxygen concentration than the conveyor gas, is supplied to the burner and is injected into the fuel-conducting passage and mixed with the fuel flow inside said fuel-conducting passage so as to obtain, upstream of the fuel outlet and upstream of the inner oxidant end outlet, an oxygen-enriched conveyor-gas propelled particulate solid fuel flow having an oxygen content of at least 21%vol O₂,
- the fuel discharge velocity differs from the inner oxidant discharge velocity so as to promote mixing between the fuel flow and the inner oxidant flow downstream of the inner oxidant end outlet.

2. Method according to claim 1, whereby, at the fuel outlet, the oxygen-enriched conveyor gas has an oxygen content of at least 28%vol O₂, preferably of at least 32%vol O₂.

3. Method according to any one of the preceding claims, wherein each of said first and second inner oxidant flows has an oxygen content of at least 50%vol O₂, preferably of at least 80 %vol O₂ and more preferably of at least 90%vol O₂.

4. Method according to any one of the preceding claims, wherein the outer oxidant flow is an air flow.

5. Method according to any one of claims 1 to 3, wherein the outer oxidant flow has an oxygen content of at least 50%vol O₂, preferably of at least 80 %vol O₂ and more preferably of at least 90%vol O₂.

6. Method according to any one of the preceding claims, whereby the conveyor gas is air.

7. Method according to any one of claims 1 to 5, whereby the conveyor gas contains combustion effluent gas, steam and/or CO₂.

8. Method according to any one of the preceding claims, whereby the particulate solid fuel is selected from pulverized coal, pet coke, particulate biomass and mixtures thereof.

9. Method according to any one of the preceding claims, whereby the second inner oxidant flow is injected into the fuel-conducting passage at multiple points of injection along the length of the fuel-conducting passage of the burner.

10. The method according to any one of the preceding claims, wherein the fuel flow is mixed with the first inner oxidant flow before being mixed the said outer oxidant flow.

11. The method according to one of the preceding claims, wherein at least 35%, preferably at least 50% and more preferably at least 65% of the total oxygen supply to the burner is supplied to the burner through the outer oxidant flow.

12. The method according to one of the preceding claims, wherein the first inner oxidant discharge velocity is equal to or greater than the outer oxidant discharge velocity.

13. Use of the method according to any one of the preceding claims to produce heat in a combustion zone of a furnace.

14. Use according to claim 13, whereby the furnace is select from the group consisting of: tunnel kilns and furnaces, passage kilns, boilers, rotary kilns and furnaces and tunnel furnaces.

15. Use according to claim 13 or 14 in the production of hydraulically setting binder.

## Patentansprüche

1. Verfahren zur Kombination von Sauerstoff und Brennstoff in einem Brenner zur Erzeugung einer Flamme, wobei das Verfahren umfasst:
- Zuführen eines äußeren Stroms sauerstoffhaltigen Oxidans zu einem äußeres Oxidans leitenden Durchlass des Brenners, Leiten des äußeren Oxidansstroms durch den äußeres Oxidans leitenden Durchlass und Abgeben des äußeren Oxidansstroms mit einer Abgabegeschwindigkeit für äußeres Oxidans aus dem äußeres Oxidans leitenden Durchlass durch einen Auslass für äußeres Oxidans des Brenners,
- Zuführen eines Brennstoffstroms zu einem Brennstoff leitenden Durchlass des Brenners, Leiten des Brennstoffstroms durch den Brennstoff leitenden Durchlass und Abgeben des Brennstoffstroms mit einer Brennstoffabgabegeschwindigkeit aus dem Brennstoff leitenden Durchlass durch einen Brennstoffauslass des Brenners, der bezogen auf den Auslass für äußeres Oxidans koaxial angeordnet und radial nach innen von diesem beabstandet ist,
- Zuführen eines ersten inneren Stroms sauerstoffhaltigen Oxidans zu einem inneres Oxidans leitenden Durchlass des Brenners, Leiten des ersten inneren Oxidansstroms durch den inneres Oxidans leitenden Durchlass und Abgeben des ersten inneren Oxidansstroms mit einer Abgabegeschwindigkeit für inneres Oxidans aus dem inneres Oxidans leitenden Durchlass durch einen Endauslass für inneres Oxidans des Brenners, der bezogen auf den Brennstoffauslass koaxial angeordnet und radial nach innen von diesem beabstandet ist,
**dadurch gekennzeichnet, dass**
- der Brennstoffstrom ein Strom von durch Fördergas angetriebenem körnigem Festbrennstoff ist,
- ein zweiter innerer Oxidansstrom mit einer höheren Sauerstoffkonzentration als das Fördergas dem Brenner zugeführt wird und in den Brennstoff leitenden Durchlass eingespritzt und mit dem Brennstoffstrom im Inneren des Brennstoff leitenden Durchlasses gemischt wird, um oberhalb des Brennstoffauslasses und oberhalb des Endauslasses für inneres Oxidans einen mit Sauerstoff angereicherten, durch Fördergas angetriebenen Strom von körnigem Festbrennstoff mit einem Sauerstoffgehalt von wenigstens 21 Vol.-% O₂ zu erhalten,
- sich die Brennstoffabgabegeschwindigkeit von der Abgabegeschwindigkeit für inneres Oxidans unterscheidet, um die Vermischung zwischen dem Brennstoffstrom und dem inneren Oxidansstrom unterhalb des Endauslasses für inneres Oxidans zu unterstützen.

2. Verfahren nach Anspruch 1, wobei das mit Sauerstoff angereicherte Fördergas am Brennstoffauslass einen Sauerstoffgehalt von wenigstens 28 Vol.-% O₂, vorzugsweise wenigstens 32 Vol.-% O₂, aufweist.

3. Verfahren nach einem der vorangehenden Ansprüche, wobei jeder des ersten und zweiten inneren Oxidansstroms einen Sauerstoffgehalt von wenigstens 50 Vol.-% O₂, vorzugsweise wenigstens 80 Vol.-% O₂ und besonders bevorzugt wenigstens 90 Vol.-% O₂, aufweist.

4. Verfahren nach einem der vorangehenden Ansprüche, wobei der äußere Oxidansstrom ein Luftstrom ist.

5. Verfahren nach einem der Ansprüche 1 bis 3, wobei der äußere Oxidansstrom einen Sauerstoffgehalt von wenigstens 50 Vol.-% O₂, vorzugsweise wenigstens 80 Vol.-% O₂ und besonders bevorzugt wenigstens 90 Vol.-% O₂, aufweist.

6. Verfahren nach einem der vorangehenden Ansprüche, wobei das Fördergas Luft ist.

7. Verfahren nach einem der Ansprüche 1 bis 5, wobei das Fördergas Verbrennungsabgas, Dampf und/oder CO₂ enthält.

8. Verfahren nach einem der vorangehenden Ansprüche, wobei der körnige Festbrennstoff ausgewählt ist aus Kohlenstaub, Petrolkoks, körniger Biomasse und Gemischen derselben.

9. Verfahren nach einem der vorangehenden Ansprüche, wobei der zweite innere Oxidansstrom an zahlreichen Einspritzpunkten entlang der Länge des Brennstoff leitenden Durchlasses des Brenners in den Brennstoff leitenden Durchlass eingespritzt wird.

10. Verfahren nach einem der vorangehenden Ansprüche, wobei der Brennstoffstrom mit dem ersten inneren Oxidansstrom gemischt wird, bevor er mit dem äußeren Oxidansstrom gemischt wird.

11. Verfahren nach einem der vorangehenden Ansprüche, wobei dem Brenner wenigstens 35 %, vorzugsweise wenigstens 50 % und besonders bevorzugt wenigstens 65 %, der gesamten Sauerstoffzufuhr zum Brenner über den äußeren Oxidansstrom zugeführt werden.

12. Verfahren nach einem der vorangehenden Ansprüche, wobei die Abgabegeschwindigkeit für erstes inneres Oxidans gleich der Abgabegeschwindigkeit für äußeres Oxidans oder größer ist.

13. Verwendung des Verfahrens nach einem der vorangehenden Ansprüche zur Erzeugung von Hitze in einer Verbrennungszone eines Ofens.

14. Verwendung nach Anspruch 13, wobei der Ofen ausgewählt ist aus der Gruppe bestehend aus: Tunnelöfen, Durchlauföfen, Kesseln, Drehöfen und Tunnelöfen.

15. Verwendung nach Anspruch 13 oder 14 bei der Herstellung von hydraulisch härtendem Bindemittel.

## Revendications

1. Méthode pour combiner oxygène et combustible dans un brûleur pour produire une flamme, ladite méthode comprenant :
- l'amenée d'un flux extérieur d'oxydant contenant de l'oxygène vers un passage du brûleur conducteur d'oxydant extérieur, la conduite dudit flux d'oxydant extérieur à travers ledit passage conducteur d'oxydant extérieur et la décharge à une vitesse de décharge de l'oxydant extérieur dudit flux extérieur d'oxydant, à partir dudit passage conducteur d'oxydant extérieur, à travers une sortie du brûleur d'oxydant extérieur,
- l'amenée d'un flux de combustible vers un passage du brûleur conducteur de combustible, la conduite dudit flux de combustible à travers ledit passage conducteur de combustible et la décharge à une vitesse de décharge de combustible dudit flux de combustible, à partir dudit passage conducteur de combustible, à travers une sortie de combustible du brûleur agencée co-axialement à la sortie de l'oxydant extérieur et localisée radialement vers l'intérieur de celle-ci,
- l'amenée d'un premier flux intérieur d'oxydant contenant de l'oxygène vers un passage du brûleur conducteur d'oxydant intérieur, la conduite dudit premier flux intérieur d'oxydant à travers ledit passage conducteur d'oxydant intérieur et la décharge dudit flux intérieur d'oxydant à une vitesse de décharge de l'oxydant intérieur, à partir dudit passage conducteur d'oxydant intérieur, à travers une sortie terminale du brûleur d'oxydant intérieur agencée co-axialement à ladite sortie de combustible et localisée radialement vers l'intérieur de celle-ci,
**caractérisée en ce que** :
- le flux de combustible est un flux de particules de combustible solide propulsées par un gaz vecteur,
- un deuxième flux intérieur d'oxydant, ayant une concentration en oxygène supérieure à celle du gaz vecteur, est amené au brûleur et est injecté dans le passage conducteur de combustible et mélangé avec le flux de combustible à l'intérieur dudit passage conducteur de combustible pour obtenir, en amont de la sortie de combustible et en amont de la sortie terminale d'oxydant intérieur, un flux de particules de combustible propulsées par un gaz vecteur enrichi en oxygène ayant une teneur en oxygène d'au moins 21% vol. O₂,
- la vitesse de décharge du combustible diffère de la vitesse de décharge du flux d'oxydant intérieur pour promouvoir le mélange entre le flux de combustible et le flux d'oxydant intérieur en aval de la sortie terminale de l'oxydant intérieur.

2. Procédé selon la revendication 1, dans lequel, au niveau de la sortie de combustible, le gaz vecteur enrichi en oxygène a une teneur en oxygène d'au moins 28 % en volume d'O₂, de préférence d'au moins 32 % en volume d'O₂.

3. Procédé selon l'une quelconque des revendications précédentes, dans lequel chacun desdits premier et second flux d'oxydant intérieur a une teneur en oxygène d'au moins 50 % en volume d'O₂, de préférence d'au moins 80 % en volume d'O₂ et de manière davantage préférée d'au moins 90 % en volume d'O₂.

4. Procédé selon l'une quelconque des revendications précédentes, dans lequel le flux d'oxydant extérieur est un flux d'air.

5. Procédé selon l'une quelconque des revendications 1 à 3, dans lequel le flux d'oxydant extérieur a une teneur en oxygène d'au moins 50 % en volume d'O₂, de préférence d'au moins 80 % en volume d'O₂ et de manière davantage préférée d'au moins 90 % en volume d'O₂.

6. Procédé selon l'une quelconque des revendications précédentes, dans lequel le gaz vecteur est de l'air.

7. Procédé selon l'une quelconque des revendications 1 à 5, dans lequel le gaz vecteur contient un effluent gazeux de combustion, de la vapeur et/ou du CO₂.

8. Procédé selon l'une quelconque des revendications précédentes, dans lequel les particules de combustible solide sont choisies parmi le charbon pulvérisé, le coke de pétrole, la biomasse particulaire et leurs mélanges.

9. Procédé selon l'une quelconque des revendications précédentes, dans lequel le second flux d'oxydant intérieur est injecté dans le passage conducteur de combustible en de multiples points d'injection le long de la longueur du passage du brûleur conducteur de combustible.

10. Procédé selon l'une quelconque des revendications précédentes, dans lequel le flux de combustible est mélangé avec le premier flux d'oxydant intérieur avant d'être mélangé avec ledit flux d'oxydant extérieur.

11. Procédé selon l'une quelconque des revendications précédentes, dans lequel au moins 35 %, de préférence au moins 50 % et de manière davantage préférée au moins 65 % de l'apport d'oxygène total au brûleur sont amenés au brûleur à travers le flux d'oxydant extérieur.

12. Procédé selon l'une des revendications précédentes, dans lequel la première vitesse de décharge d'oxydant intérieur est supérieure ou égale à la vitesse de décharge d'oxydant extérieur.

13. Utilisation du procédé selon l'une quelconque des revendications précédentes, pour produire de la chaleur dans une zone de combustion d'un fourneau.

14. Utilisation selon la revendication 13, dans laquelle le fourneau est choisi dans le groupe consistant en : des fours et fourneaux tunnels, des fours de passage, des chaudières, des fours et fourneaux rotatifs et des fourneaux tunnels.

15. Utilisation selon la revendication 13 ou 14, dans la production de liant à durcissement hydraulique.
